# EUROPEAN PATENT SPECIFICATION

(11) **EP 2 760 570 B1**
(45) Date of publication and mention of the grant of the patent: **21.10.2015**
(21) Application number: 12769543.5
(22) Date of filing: 14.09.2012
(51) Int. Cl.: B01D 69/12, B01D 71/56, B01D 67/00

(54) **COMPOSITE POLYAMIDE MEMBRANE DERIVED FROM CARBOXYLIC ACID CONTAINING ACYL HALIDE MONOMER**
ZUSAMMENGESETZTES POLYAMIDMEMBRAN AUS CARBONSÄURE MIT ACYLHALOGENMONOMER
MEMBRANE DE POLYAMIDE COMPOSITE DÉRIVÉ D'ACIDE CARBOXYLIQUE CONTENANT UN MONOMÈRE HALOGÉNURE D'ACYLE

(30) Priority: 29.09.2011 US 201161540555 P; 25.07.2012 US 201261675613 P
(43) Date of publication of application: 06.08.2014
(73) Proprietor: Dow Global Technologies LLC, Midland, MI 48674 (US)
(72) Inventor: ROY, Abhishek, Edina, MN 55439 (US); JONS, Steven D., Eden Prairie, MN 55346 (US); KOOB, Joseph D., Jordan, MN 55352 (US); PEERY, Martin H., Bloomington, MN 55438 (US); QIU, XiaoHua Sam, Midland, MI 48642 (US); ROSENBERG, Steven, Shorewood, MN 55331 (US); TOMLINSON, Ian A., Midland, MI 48642 (US)
(74) Representative: Houghton, Mark Phillip
(86) International application number: PCT/US2012/055271
(87) International publication number: WO 2013/048765

(56) References cited:
- WO-A2-2009/129354
- US-A- 4 259 183
- US-A- 4 277 344
- US-A1- 2010 062 156
- US-B2- 6 878 278

## Description

### FIELD OF THE INVENTION:

The present invention is directed toward composite membranes along with methods for making and using the same.

### DESCRIPTION OF THE RELATED ART:

Composite polyamide membranes are used in a variety of fluid separations. One common class of membranes includes a porous support coated with a "thin film" polyamide layer. The thin film layer may be formed by an interfacial polycondensation reaction between polyfunctional amine (e.g. m-phenylenediamine) and polyfunctional acyl halide (e.g. trimesoyl chloride) monomers which are sequentially coated upon the support from immiscible solutions, see for example US 4277344 to Cadotte. Various constituents may be added to one or both of the coating solutions to improve membrane performance. For example, US 4259183 to Cadotte describes the use of combinations of bi- and tri-functional acyl halide monomers, e.g. isophthaloyl chloride or terephthaloyl chloride with trimesoyl chloride. US 6878278 to Mickols describes the addition of a wide range of complexing agents to the acyl halide coating solution, including various phosphorous containing species. US 6521130 describes the addition of a carboxylic acid (e.g. aliphatic and aromatic carboxylic acids) or carboxylic acid ester to one or both monomer coating solutions prior to polymerization. US 2009/0272692, US 2010/0062156, US 2011/0005997, WO 2009/129354, WO 2010/120326 and WO 2010/120327 describe the use of various polyfunctional acyl halides and their corresponding partially hydrolyzed counterparts. The search continues for new additives that offer improved membrane performance.

### BRIEF SUMMARY OF THE INVENTION:

The present invention is as set out in the accompanying claims.

The invention includes a method for making a composite polyamide membrane comprising the steps of applying polyfunctional amine and acid halide monomers to a surface of a porous support and interfacially polymerizing the monomers to form a thin film polyamide layer. The method is characterized by applying a coating solution to the surface of the porous support comprising: i) a hydrocarbon solvent, ii) an additional monomer comprising a carboxylic acid monomer comprising an aliphatic or aromatic moiety substituted with single carboxylic acid functional group and at least one acyl halide functional group and comprising equal to or less than 30 carbon atoms, and iii) a tri-hydrocarbyl phosphate compound, wherein the interfacial polymerization is conducted in the presence of the carboxylic acid monomer and tri-hydrocarbyl phosphate compound. The invention includes many additional embodiments.

### DETAILED DESCRIPTION OF THE INVENTION:

The invention is not particularly limited to a specific type, construction or shape of composite membrane or application. For example, the present invention is applicable to flat sheet, tubular and hollow fiber polyamide membranes useful in a variety of applications including forward osmosis (FO), reverse osmosis (RO), nano filtration (NF), ultra filtration (UF) and micro filtration (MF) fluid separations. However, the invention is particularly useful for membranes designed for RO and NF separations. RO composite membranes are relatively impermeable to virtually all dissolved salts and typically reject more than about 95% of salts having monovalent ions such as sodium chloride. RO composite membranes also typically reject more than about 95% of inorganic molecules as well as organic molecules with molecular weights greater than approximately 100 Daltons. NF composite membranes are more permeable than RO composite membranes and typically reject less than about 95% of salts having monovalent ions while rejecting more than about 50% (and often more than 90%) of salts having divalent ions - depending upon the species of divalent ion. NF composite membranes also typically reject particles in the nanometer range as well as organic molecules having molecular weights greater than approximately 200 to 500 Daltons.

Examples of composite polyamide membranes include FilmTec Corporation FT-30™ type membranes, i.e. a flat sheet composite membrane comprising a bottom layer (back side) of a nonwoven backing web (e.g. PET scrim), a middle layer of a porous support having a typical thickness of about 25-125 µm and top layer (front side) comprising a thin film polyamide layer having a thickness typically less than about 1 micron, e.g. from 0.01 micron to 1 micron but more commonly from about 0.01 to 0.1 µm. The porous support is typically a polymeric material having pore sizes which are of sufficient size to permit essentially unrestricted passage of permeate but not large enough so as to interfere with the bridging over of a thin film polyamide layer formed thereon. For example, the pore size of the support preferably ranges from about 0.001 to 0.5 µm. In some instances pore diameters larger than about 0.5 µm permit the polyamide layer to sag into the pores and disrupt a flat sheet configuration. Non-limiting examples of porous supports include those made of: polysulfone, polyether sulfone, polyimide, polyamide, polyetherimide, polyacrylonitrile, poly(methyl methacrylate), polyethylene, polypropylene, and various halogenated polymers such as polyvinylidene fluoride. For RO and NF applications, the porous support provides strength but offers little resistance to fluid flow due to its relatively high porosity.

Due to its relative thinness, the polyamide layer is often described in terms of its coating coverage or loading upon the porous support, e.g. from about 2 to 5000 mg of polyamide per square meter surface area of porous support and more preferably from about 50 to 500 mg/m². The polyamide layer is preferably prepared by an interfacial polycondensation reaction between a polyfunctional amine monomer and a polyfunctional acyl halide monomer upon the surface of the porous support as described in US 4277344 and US 6878278. More specifically, the polyamide membrane layer may be prepared by interfacially polymerizing a polyfunctional amine monomer with a polyfunctional acyl halide monomer, (wherein each term is intended to refer both to the use of a single species or multiple species), on at least one surface of a porous support. As used herein, the term "polyamide" refers to a polymer in which amide linkages (-C(O)NH-) occur along the molecular chain. The polyfunctional amine and polyfunctional acyl halide monomers are most commonly applied to the porous support by way of a coating step from solution, wherein the polyfunctional amine monomer is typically coated from an aqueous-based or polar solution and the polyfunctional acyl halide from a hydrocarbon solution (also referred to herein as "organic-based" or "non-polar" solution). Although the coating steps need not follow a specific order, the polyfunctional amine monomer is preferably first coated on the porous support followed by the polyfunctional acyl halide. Coating can be accomplished by spraying, film coating, rolling, or through the use of a dip tank among other coating techniques. Excess solution may be removed from the support by air knife, dryers, ovens and the like.

The polyfunctional amine monomer comprises at least two primary or secondary amino groups and may be aromatic (e.g., m-phenylenediamine, p-phenylenediamine, 1,3,5-triaminobenzene, 1,3,4-triaminobenzene, 3,5-diaminobenzoic acid, 2,4-diaminotoluene, 2,4-diaminoanisole, and xylylenediamine) or aliphatic (e.g., ethylenediamine, propylenediamine, and tris (2-diaminoethyl) amine). Examples of preferred polyfunctional amine monomers include primary amines having two or three amino groups, for example, m-phenylene diamine, and secondary aliphatic amines having two amino groups such as piperazine. One preferred polyfunctional amine is m-phenylene diamine (mPD). The polyfunctional amine monomer may be applied to the porous support as a polar solution. The polar solution may contain from about 0.1 to about 20 weight percent and more preferably from about 0.5 to about 6 weight percent polyfunctional amine monomer. Once coated on the porous support, excess solution may be optionally removed.

The polyfunctional acyl halide monomer comprises at least two acyl halide groups and is preferably coated from a hydrocarbon solvent (e.g. organic-based or non-polar solvent) although the polyfunctional acyl halide may be delivered from a vapor phase (e.g., for polyfunctional acyl halides having sufficient vapor pressure). The polyfunctional acyl halide is not particularly limited and aromatic or alicyclic polyfunctional acyl halides can be used along with combinations thereof. Non-limiting examples of aromatic polyfunctional acyl halides include: trimesic acid chloride, terephthalic acid chloride, isophthalic acid chloride, biphenyl dicarboxylic acid chloride, and naphthalene dicarboxylic acid dichloride. Non-limiting examples of alicyclic polyfunctional acyl halides include: cyclopropane tri carboxylic acid chloride, cyclobutane tetra carboxylic acid chloride, cyclopentane tri carboxylic acid chloride, cyclopentane tetra carboxylic acid chloride, cyclohexane tri carboxylic acid chloride, tetrahydrofuran tetra carboxylic acid chloride, cyclopentane dicarboxylic acid chloride, cyclobutane dicarboxylic acid chloride, cyclohexane dicarboxylic acid chloride, and tetrahydrofuran dicarboxylic acid chloride. One preferred polyfunctional acyl halide is trimesoyl chloride (TMC).

The polyfunctional acyl halide may be dissolved in a hydrocarbon solvent in a range from about 0.01 to 10 weight percent, preferably 0.05 to 3 weight percent and may be delivered as part of a continuous coating operation. Suitable hydrocarbon solvents are those which are capable of dissolving the polyfunctional acyl halide and which are immiscible with water, e.g. the solvent preferably has a water solubility of less than 800 ppm (and more preferably less than 500, 400, 300, or 200, or in some embodiments, less than 150 ppm). As used herein, the term "water solubility" refers to the concentration of water that is soluble in a chosen hydrocarbon solvent measured at 20°C (101 kPa) as measured by ASTM D4928-11. The selection of hydrocarbon solvent is not particularly limited and combinations of multiple solvents may be used. The solvent is preferably a liquid at 20°C (101 kPa). Non-limiting examples of applicable hydrocarbon solvents include: paraffins (e.g. hexane, cyclohexane, heptane, octane, dodecane), isoparaffins (e.g. ISOPAR™ L), aromatics (e.g. benzene, 1,3,5-trimethylbenzene, toluene,) and halogenated hydrocarbons (e.g. FREON™ series, chlorobenzene, di- and tri-chlorobenzene).

Once brought into contact with one another, the polyfunctional acyl halide and polyfunctional amine monomers react at their surface interface to form a polyamide layer or film. This layer, often referred to as a polyamide "discriminating layer" or "thin film layer," provides the composite membrane with its principal means for separating solute (e.g. salts) from solvent (e.g. aqueous feed).

The reaction time of the polyfunctional acyl halide and the polyfunctional amine monomer may be less than one second but contact times typically range from about 1 to 60 seconds, after which excess liquid may be optionally removed by way of an air knife, water bath(s), dryer or the like. The removal of the excess solvent can be achieved by drying at elevated temperatures, e.g. from about 40°C to about 120°C, although air drying at ambient temperatures may be used.

The invention further includes the step of conducting the interfacial polymerization in the presence of: a carboxylic acid monomer and a tri-hydrocarbyl phosphate compound. The carboxylic acid monomer comprises an aliphatic or aromatic moiety substituted with single carboxylic acid functional group and at least one acyl halide functional group. In a preferred set of embodiments, the carboxylic acid monomer has a molecular weight less than: 700, 600, 500, 400 or 300 Daltons. In another set of embodiments, the carboxylic acid monomer comprises equal to or less than 30, 20, 15 or 12 carbon atoms, and preferably includes more than 3 carbon atoms. In yet another set of embodiments, the monomer comprises from 4 to 12 carbon atoms. Non-limiting examples of carboxylic acid monomers based upon aliphatic moieties include: 4-chloro-4-oxobutanoic acid, 5-chloro-5-oxopentanoic acid, 6-chloro-6-oxohexanoic acid, 7-chloro-7-oxoheptanoic acid, 8-chloro-8-oxooctanoic acid, 9-chloro-9-oxononanoic acid, 10-chloro-10-oxodecanoic acid, 11-chloro-11-oxoundecanoic acid, 12-chloro-12-oxododecanoic acid; 3-(chlorocarbonyl)cyclobutanecarboxylic acid, 3-(chlorocarbonyl)cyclopentane carboxylic acid, 2,4-bis(chlorocarbonyl)cyclopentane carboxylic acid, 3,5-bis(chlorocarbonyl) cyclohexanecarboxylic acid, and 4-(chlorocarbonyl) cyclohexanecarboxylic acid. Non-limiting examples of monomers based upon aromatic moieties include: 4-(chlorocarbonyl) benzoic acid, 3,5-bis(chlorocarbonyl)benzoic acid, 7-(chlorocarbonyl)-2-naphthoic acid and 5,7-bis(chlorocarbonyl)-2-naphthoic acid. Additional examples of applicable monomers include branched analogs of the preceding species along analogs including additional acyl halide functional groups.

The applicable tri-hydrocarbyl phosphate compounds are represented by Formula (I): 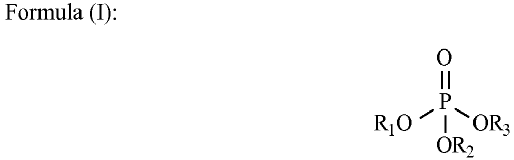 wherein "P" is phosphorous, "O" is oxygen and R₁, R₂ and R₃ are independently selected from hydrogen and hydrocarbyl groups comprising from 1 to 10 carbon atoms, with the proviso that no more than one of R₁, R₂ and R₃ are hydrogen. R₁, R₂ and R₃ are preferably independently selected from aliphatic and aromatic groups. Applicable aliphatic groups include both branched and unbranched species, e.g. methyl, ethyl, propyl, isopropyl, butyl, isobutyl, pentyl, 2-pentyl, 3-pentyl, cyclopentyl, cyclohexyl, etc.; however, alkyl groups having from 3 to 10 carbon atoms are preferred. Applicable aromatic groups include phenyl and naphthyl groups. Specific examples of tri-hydrocarbyl phosphate compounds include: tripropyl phosphate, tributyl phosphate, tripentyl phosphate, trihexyl phosphate, triphenyl phosphate, propyl biphenyl phosphate, dibutyl phenyl phosphate, butyl diethyl phosphate, dibutyl hydrogen phosphate, butyl heptyl hydrogen phosphate and butyl heptyl hexyl phosphate. Additional examples are described in US 6878278, US 6723241, US 6562266 and US 6337018.

The carboxylic acid monomer and tri-hydrocarbyl phosphate compound may be combined within a hydrocarbon solvent (wherein the solvent is selected based upon the same criteria as previously described with reference to the polyfunctional acyl halide monomer) to form a coating solution which is applied upon the porous support, e.g. within a few seconds before or after a coating of the polyfunctional acyl halide is applied, or is combined with the polyfunctional acyl halide and applied upon the porous support as a single solution.

In another embodiment, the carboxylic acid monomer may be formed in-situ by adding water to a coating solution comprising the hydrocarbon solvent, polyfunctional acyl halide monomer and tri-hydrocarbyl phosphate compound. For example, the aforementioned constituents may be combined to form a solution preferably comprising at least 80 v/v% hydrocarbon solvent, and in some embodiments at least 90 v/v%, 92 v/v% or 95 v/v% hydrocarbon solvent along with optionally one or more of the following: i) water at a molar concentration greater than its solubility limit (e.g. concentration greater than 10% of solubility limit) within the solvent but less that its solubility limit with the hydrocarbon solution, ii) the polyfunctional acyl halide at a molar concentration less than its solubility limit within the solvent and at a molar ratio with water from 1:2 to 1000:1, and iii) the tri-hydrocarbyl phosphate compound at a molar ratio with the polyfunctional acyl halide from 100:1 to 1:1000. In a preferred embodiment, the solution comprises the tri-hydrocarbyl phosphate compound at a molar ratio with the polyfunctional acyl halide from 10:1 to 1:100. In another embodiment, the solution comprises the polyfunctional acyl halide at a molar ratio with water of from 1:2 to 200:1, and in other embodiments from 1:2 to 100:1. In still another embodiment, the solution includes at least one but preferably all of the following: water at a concentration of less than 1 wt%, the polyfunctional acyl halide at a concentration of less than 10 wt% or the tri-hydrocarbyl phosphate compound at a concentration of less than 10 wt%. In yet other set of embodiments, the hydrocarbon solution includes at least one but preferably all of the following: water at a concentration of less than 0.5 wt%, the polyfunctional acyl halide at a concentration of less than 5 wt%, or the tri-hydrocarbyl phosphate compound at a concentration of less than 5 wt%. Representative reaction pathways are illustrated below. 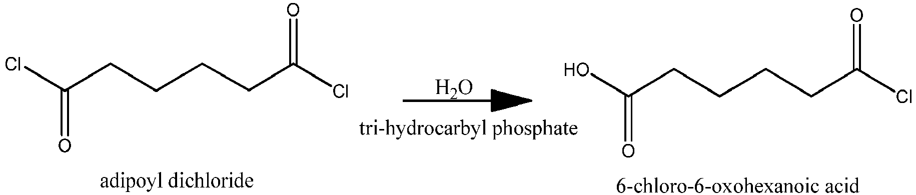 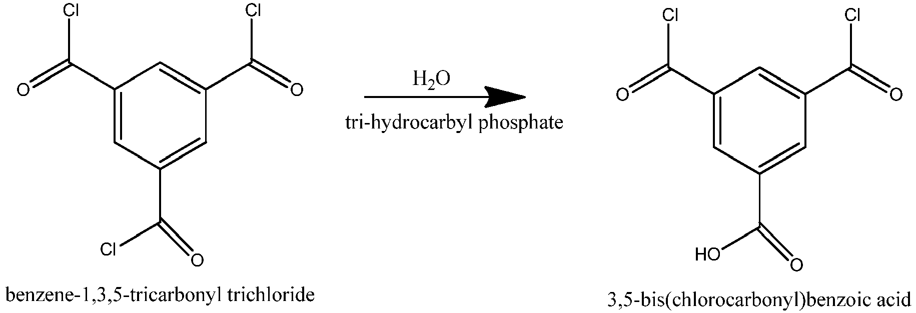 The carboxylic acid monomer typically has a solubility limit of less than 1 wt. % in the hydrocarbon solvent, and in some embodiments less than 0.1 wt%, 0.05 wt %, 0.02 wt% and still others less than even 0.01 wt%. While the carboxylic acid monomer is produced to a molar concentration greater than its solubility limit (e.g. greater than 10% its solubility limit) within the solvent, the monomer remains soluble in solution.

While not wishing to be bound by theory, the subject class of tri-hydrocarbyl phosphate compounds is believed to increase the solubility of water (and the carboxylic acid monomer) within the hydrocarbon solvent and to selectively catalyze the hydrolysis of a portion of the polyfunctional acyl halide monomer. The hydrolyzed product is predominantly the mono-hydrolyzed analog (e.g. more than 70 wt %, 80 wt% and even 90 wt% of the hydrolyzed product is the mono-hydrolyzed form). This technical effect is believed to be unique to the described class of tri-hydrocarbyl phosphate compounds and has been found to produce membranes having improved performance.

In another embodiment, the carboxylic acid monomer is added to the polyfunctional acyl halide coating solution along with the tri-hydrocarbyl phosphate compound. The upper concentration range of carboxylic acid monomer is limited by its solubility within the solution and is dependent upon the concentration of the tri-hydrocarbyl phosphate compound present in solution, i.e. tri-hydrocarbyl phosphate compound is believed to serve as a solubilizer for the carboxylic acid monomer within the solvent. In most embodiments, the upper concentration limit is less than 1 wt %. In one set of embodiments, the carboxylic acid monomer is provided in the solution at concentration of at least 0.01 wt%, 0.02 wt%, 0.03 wt%, 0.04 wt%, 0.05 wt%, 0.06 wt% or even 0.1wt % while remaining soluble in the coating solution. In another set of embodiments, the coating solution comprises from 0.01 to 1 wt %, 0.02 to 1 wt %, 0.04 to 1 wt % or 0.05 to 1 wt% of the hydrocarbon compound. In yet another set of embodiments, the solution comprises from 0.01 to 10 wt% of the tri-hydrocarbyl phosphate compound. The aforementioned constituents may be combined to form a coating solution preferably comprising at least 80 v/v% hydrocarbon solvent, and in some embodiments at least 90 v/v%, 92 v/v% or 95 v/v% hydrocarbon solvent. The aforementioned constituents may be combined and mixed within a reaction vessel at room temperature. Preferred ratios of carboxylic acid monomer to tri-hydrocarbyl phosphate are from 1:1000 to 2:1 and more preferably 1:100 to 1:1.

The inclusion of the carboxylic acid monomer during interfacial polymerization between the polyfunctional amine and acyl halide monomers results in a membrane having improved performance. And, unlike post hydrolysis reactions that may occur on the surface of the thin-film polyamide layer, the inclusion of the carboxylic acid monomer during interfacial polymerization is believed to result in a polymer structure that is beneficially modified throughout the thin-film layer.

In many embodiments, membranes prepared with the subject monomer exhibit lower solute passage when compared with substantially similar membranes prepared without. And surprising, in many embodiments membranes prepared with the subject monomer exhibit higher flux.

While not limited to a particular type of polyamide membrane, the subject invention is particularly suited for application to composite membranes such as those commonly used in RO and NF applications, and more particularly to flat sheet composite polyamide membranes used in RO and NF applications. The thin film polyamide layer may optionally include hygroscopic polymers upon at least a portion of its surface. Such polymers include polymeric surfactants, polyacrylic acid, polyvinyl acetate, polyalkylene oxide compounds, poly(oxazoline) compounds, polyacrylamides and related reaction products as generally described in US 6280853; US 7815987; US 7918349; US 7905361 and US 2011/0220569. In some embodiments, such polymers may be blended and/or reacted and may be coated or otherwise applied to the polyamide membrane from a common solution, or applied sequentially.

Many embodiments of the invention have been described and in some instances certain embodiments, selections, ranges, constituents, or other features have been characterized as being "preferred." Characterizations of "preferred" features should in no way be interpreted as deeming such features as being required, essential or critical to the invention. It will be understood that the various coating operations may be combined or bifurcated in to separated steps, e.g. the polyfunctional acyl halide and carboxylic acid monomer may be coated from a common coating solution, from separate solutions, or from multiple coating solutions including various ratios of each.

### EXAMPLES

Preparation of mono-hydrolyzed polyfunctional acid chlorides: High purity mono-hydrolyzed polyfunctional acid chlorides can be obtained via a variety of routes, including for example, preparing a starter solution by combining a polyfunctional acid chloride (many of which are commercially available (e.g., trimesoyl chloride (TMC) and isophthaloyl chloride (IPC)), trialkylphosphate (e.g. tributylphosphate (TBP) and triethylphosphate (TEP), and trace levels of water in 100 mL of a non-polar solvent in quantities described as an example in Table A. The starter solution is allowed to stir for 14-20 hours at which time an additional 1 g of the polyfunctional acid chloride and 0.0076 mL of water are added. The solution is allowed to stir for 1-2 hours and an additional 0.0076 mL of water is added. This is repeated until a total of 4 additions of 0.0076 mL of water are added to the starter solution. During the reaction the mono-hydrolyzed polyfunctionalized acid chloride precipitates out of the solution. The white precipitate can be collected using filter paper and washed repeatedly with fresh solvent yielding high purity mono-hydrolyzed polyfunctional acid chloride.

**Table A:**

| | Acid Chloride | | Additive | | | Water (ppm) | Mono-hydrolyzed prdt. Selectivity (%) |
|---|---|---|---|---|---|---|---|
| Ex. No. | type | wt% | type | wt% | Solvent | | |
| A-1 | TMC | 1.2 | TBP | 0.56 | Isopar L | 100 | 99 |
| A-2 | IPC | 1.0 | TBP | 0.48 | Isopar L | 20 | 100 |
| A-3 | TMC | 2.0 | TEP | 0.65 | Isopar L | 20 | 100 |
| A-4 | TMC | 3.9 | TEHP | 1.30 | Isopar L | 20 | 94.8 |
| A-5 | TMC | 2.0 | TBP | 0.65 | 90/10 Isopar L /toluene | 20 | 100 |

*Insitu* preparation of mono-hydrolyzed polyfunctional acid chlorides: A solution of 2% w/w trialkylphosphate in Isopar L is combined with 200 ppm water and stirred vigorously for 1 hour. The top Isopar layer is decanted from the water and the polyfunctional acid chloride is added to make a 0.2% w/w solution. The solution is allowed to stir for 72-96 h or until 60-80% hydrolysis of the polyfunctional acid chloride is mono-hydrolyzed (as observed by ¹H NMR). This solution can be used as a mixture of unreacted polyfunctional acid chloride, mono-hydrolyzed acid chloride, and trialkylphosphate and treated accordingly to provide the recipes described in the examples below.

### Aromatic acid chlorides with a carboxylic acid group (Examples 1-5):

Unless otherwise stated, all sample membranes were produced using a pilot scale membrane manufacturing line. The raw materials were commercially available through a number of vendors with the exception of the mono-hydrolyzed polyfunctional acid chlorides which were prepared in the pure form or *insitu* in a concentrate solution as described above. Polysulfone supports were casts from 16.5wt. % solutions in dimethylformamide (DMF) and subsequently soaked in a 3.5 wt. % meta-phenylene diamine (mPD) aqueous solution. The resulting support was then pulled through a reaction table at constant speed while a thin, uniform layer of a non-polar solution was applied. The non-polar solution included isoparaffinic (ISOPAR L), trimesoyl acyl chloride (TMC), an acid chloride with at least one carboxylate moiety (except for control membranes), and optionally a phosphate additive identified below. Excess non-polar solution was removed and the resulting composite membrane was passed through water rinse tanks and drying ovens. Coupons of the sample membranes were then subjected to standard pressure testing using an aqueous salt solution (2000 ppm NaCl) at 150 psi, pH 8 and at room temperature. The testing results are summarized in the tables provided below each example.

### Example 1: 1-carboxy-3,5-dichloroformyl benzene (mhTMC)

The non-polar coating solution included a isoparaffinic solvent (ISOPAR L), a combination of trimesoyl acid chloride (TMC) and 1-carboxy-3,5-dichloroformyl benzene (mhTMC) in varying ratios while maintaining the total acid chloride content at 0.26 wt%, and optionally tributyl phosphate (TBP) in a constant stoichiometric molar ratio of 1.1:1 with TMC (with TBP - Table 1A; without TBP - Table 1B).

**Table 1A (with TBP):**

| Sample No. | mhTMC (%) | Flux (GFD) | NaCl Passage (%) | Flux Std. Dev. (GFD) | NaCl Passage Std. Dev. (%) |
|---|---|---|---|---|---|
| 1-1 | 0 | 46.9 | 0.86 | 1.8 | 0.07 |
| 1-2 | 0.0065 | 45.8 | 0.49 | 1.1 | 0.04 |
| 1-3 | 0.013 | 44.1 | 0.42 | 0.9 | 0.06 |
| 1-4 | 0.026 | 43.7 | 0.37 | 2.1 | 0.04 |
| 1-5 | 0.052 | 48.6 | 0.43 | 1.3 | 0.03 |
| 1-6 | 0.078 | 53.6 | 0.75 | 1.4 | 0.06 |

**Table 1B (no TBP):**

| Sample No. | mhTMC (%) | Flux (GDF) | NaCl Passage (%) | Flux Std. Dev. (GFD) | NaCl Passage Std. Dev. (%) |
|---|---|---|---|---|---|
| 1-7 | 0 | 13.6 | 1.10 | 0.6 | 0.4 |
| 1-8 | 0.0065 | 10.1 | 1.18 | 0.9 | 0.04 |
| 1-9 | 0.013 | 11.0 | 1.41 | 0.5 | 0.06 |
| 1-10 | 0.019 | 13.6 | 0.99 | 0.5 | 0.13 |
| 1-11 | 0.26 | 9.0 | 1.81 | 0.5 | 0.06 |

### Example 2: 3-(chlorocarbonyl) benzoic acid

The non-polar solution used to prepare the sample membranes included TMC and 3-(chlorocarbonyl) benzoic acid (as the subject monomer) within an isoparaffinic solvent (ISOPAR L). The total acyl chloride content of the non-polar solution used to prepare each sample was held constant at 0.21 % w/v. The concentration of the subject monomer was varied from 0 to 0.04% w/v while the remaining acyl chloride content was contributed solely by TMC. The non-polar solution also contained approximately 0.27% w/v of tri butyl phosphate (TBP).

**Table 2:**

| Sample No. | 3-chlorocarbonyl benzoic acid (%w/v) | Flux (GFD) | NaCl Passage (%) | Flux Std. Dev. (GFD) | NaCl Passage Std. Dev. (%) |
|---|---|---|---|---|---|
| 2-1 | 0 | 50.5 | 0.54% | 1.87 | 0.03% |
| 2-2 | 0.005 | 49.0 | 0.54% | 2.50 | 0.08% |
| 2-3 | 0.01 | 46.6 | 0.40% | 0.93 | 0.00% |
| 2-4 | 0.02 | 46.7 | 0.38% | 0.79 | 0.01% |
| 2-5 | 0.03 | 48.5 | 0.40% | 0.83 | 0.03% |
| 6-2 | 0.04 | 48.9 | 0.51% | 2.92 | 0.10% |

### Example 3: 3-(chlorocarbonyl) benzoic acid vs. 1,3-benzenedicarbonyl dichloride

The non-polar solution used to prepare the sample membranes included TMC, 3-(chlorocarbonyl) benzoic acid as the subject monomer (Sample 3-3) or 1,3-benzenedicarbonyl dichloride as a comparison monomer (Sample 3-2) within an isoparaffinic solvent (ISOPAR L). The total acyl chloride content of the non-polar solutions used to prepare each sample was held constant at 0.2 % w/v. The non-polar solution also contained approximately of 0.27 % w/v TBP.

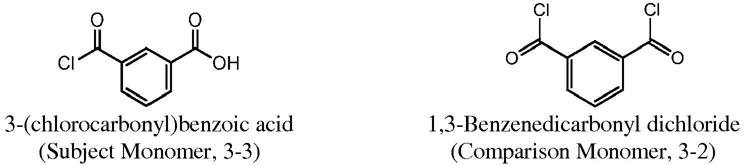

**Table 3:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| 3-1 | 0 | 41.5 | 0.52% | 1.05 | 0.023% |
| 3-2 (Comp) | 0.03 | 37.1 | 0.62% | 0.34 | 0.028% |
| 3-3 | 0.026 | 36.0 | 0.41% | 1.84 | 0.039% |

### Example 4: 3-(chlorocarbonyl)-5-nitrobenzoic vs. 5-nitroisophthaloyl dichloride

The non-polar solution used to prepare the sample membranes included 3-(chlorocarbonyl)-5-nitrobenzoic as the subject monomer (Sample 4-2) and 5-nitroisophthaloyl dichloride as a comparison monomer (Sample 4-1) within an isoparaffinic solvent (ISOPAR L). The total acyl chloride content of the non-polar solutions used to prepare each sample was held constant at 0.175 % w/v. The non-polar solution also contained approximately of 0.195 % w/v TBP.

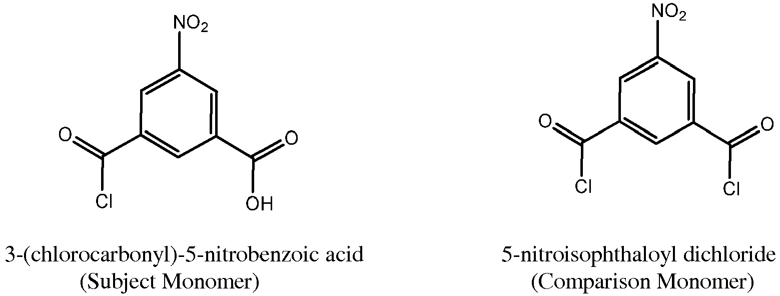

**Table 4:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| 4-1(Comp) | 0.02 | 36.3 | 0.64% | 0.82 | 0.07% |
| 4-2 | 0.02 | 32.5 | 0.47% | 0.83 | 0.10% |

### Example 5: 3-(chlorocarbonyl)-5-hydroxybenzoic acid vs. 5-hydroxyisophthaloyl dichloride

The non-polar solution used to prepare the sample membranes included TMC, 3-(chlorocarbonyl)-5-hydroxybenzoic acid as the subject monomer (Sample 5-2) and 5-hydroxyisophthaloyl dichloride as a comparison monomer (Sample 5-1). The total acyl chloride content of the non-polar solutions used to prepare each sample was held constant at 0.175 % w/v. The non-polar solution also contained approximately of 0.195 % w/v TBP

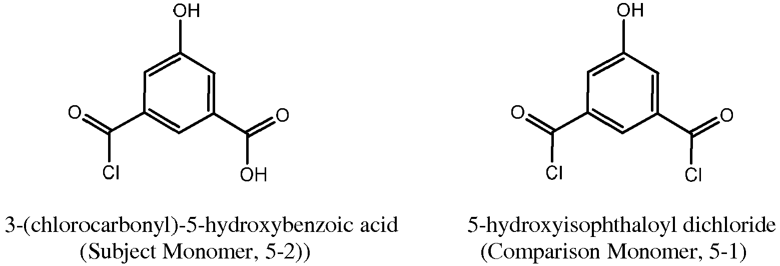

**Table 5:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| 5-1(Comp) | 0.02 | 34.3 | 0.69% | 1.16 | 0.08% |
| 5-2 | 0.02 | 33.3 | 0.53% | 1.34 | 0.07% |

### Example 6: Evaluation of 3-(chlorocarbonyl)benzoic acid without trialkylphosphate

Hand cast sample composite polyamide membranes were made using an aqueous 3.0 wt. % mPD solution and a non-polar solution including trimesoyl chloride (TMC) and 3-(chlorocarbonyl)benzoic acid as the subject monomer within an isoparaffinic solvent (ISOPAR L). The TMC content of the non-polar solutions used to prepare each sample was held constant at 0.13 % w/v. The concentration of the subject monomer was approximately 0.01% w/v in Sample 6-1 and 0% in the control. The non-polar solution also contained 8 % mesitylene as a co-solvent with Isopar L. The membranes were tested at 225 psi, 2000 ppm NaCl, pH 8 and room temperature.

**Table 6:**

| Sample No. | Monomer Concentration (g/100ml) | Mean (Avg. Flux GFD) | Mean (Avg. NaCl Passage) | Std Dev(Avg. Flux) | Std Dev(Avg. NaCl Passage) |
|---|---|---|---|---|---|
| Control | 0 | 27.7 | 0.31% | 1.30 | 0.067% |
| 6-1 | 0.01 | 32.1 | 0.42% | - | - |

As demonstrated, membranes prepared with the subject monomers exhibited improved performance, (e.g. higher flux, lower salt passage, or both) when compared with similar control and comparison membranes.

### Mono hydrolyzed aliphatic acid chlorides (Examples 7-13)

All sample membranes were produced using pilot scale membrane manufacturing line. Polysulfone supports were casts from 16.5wt. % solutions in dimethylformamide (DMF) and subsequently soaked in 3.5 wt. % aqueous solutions of meta-phenylene diamine (mPD). The resulting support was then pulled through a reaction table at constant speed while a thin, uniform layer of a non-polar solution was applied. The non-polar solution included isoparaffinic (ISOPAR L), trimesoyl acid chloride (TMC) and a subject monomer identified below. The non-polar solution also contained TBP (tri butyl phosphate) at a stoichiometric ratio of 1:1.4 with respect to TMC (except for Example 9 where the ratio was 1:1.1). Excess organic solution was removed and the resulting composite membrane was passed through water rinse tanks and drying ovens. The sample membranes were then subject to standard testing under the following conditions: 150 psi, 2000 ppm NaCl, pH 8 at room temperature.

### Example 7:

Sample composite polyamide membranes were prepared using 4-(chlorocarbonyl)butanoic acid as the "subject monomer." The total acid chloride content of the non-polar solutions used to prepare each sample was held constant at 0.24 % w/v. The concentration of the subject monomer was varied from 0 to 0.03% w/v while the remaining acid chloride content was contributed solely by TMC. As shown in Table 7, salt passage decreased from 0.99% to 0.52% with increasing concentrations of 4-(chlorocarbonyl)butanoic acid.

**Table 7:**

| | Concentration of 4-(chlorocarbonyl) butanoic acid (%w/v) | Flux (GFD) | NaCl Passage (%) | Flux Std. Dev. (GFD) | NaCl Passage Std. Dev. (%) |
|---|---|---|---|---|---|
| Control | 0 | 41.2 | 0.99% | 0.505 | 0.09% |
| 7-1 | 0.005 | 44.9 | 0.70% | 0.242 | 0.09% |
| 7-2 | 0.011 | 42.1 | 0.58% | 1.068 | 0.04% |
| 7-3 | 0.022 | 40.5 | 0.58% | 1.100 | 0.03% |
| 7-4 | 0.03 | 42.6 | 0.52% | 0.917 | 0.06% |

### Example 8:

Sample composite polyamide membranes were prepared using 2-(chlorocarbonyl)ethanoic acid as the subject monomer. The total acid chloride content of the non-polar solutions used to prepare each sample was held constant at 0.24 % w/v. The concentration of the subject monomer was varied from 0 to 0.03% w/v while the remaining acid chloride content was contributed solely by TMC. As shown in Table 8, salt passage decreased from 1.46% to 0.73% with increasing concentrations of 2-(chlorocarbonyl)ethanoic acid.

**Table 8:**

| | Concentration of 2-(chlorocarbonyl) ethanoic acid (%w/v) | Flux (GFD) | NaCl Passage (%) | Flux Std. Dev. (GFD) | NaCl Passage Std. Dev. (%) |
|---|---|---|---|---|---|
| Control | 0 | 46.2 | 1.46% | 1.53 | 0.09% |
| 8-1 | 0.005 | 46.2 | 0.88% | 0.04 | 0.02% |
| 8-2 | 0.011 | 46.3 | 0.81% | 0.70 | 0.06% |
| 8-3 | 0.022 | 44.8 | 0.81% | 0.81 | 0.00% |
| 8-4 | 0.03 | 44.6 | 0.73% | 0.58 | 0.00% |

### Example 9:

Sample composite polyamide membranes were prepared using 5-chlorocarbonyl pentanoic acid as the subject monomer (Samples 9-2 and 9-4). For comparison, membranes were also prepared with 1,4-dichlorocarbonyl butane and TMC (Comparison Samples 9-1 and 9-3). The total acid chloride content of the non-polar solutions used to prepare each sample was held constant at 0.175 % w/v. The concentration of the subject monomer was varied from 0 to 0.02% w/v while the remaining acid chloride content was contributed solely by TMC. As shown in table 9, membranes prepared with the subject monomer, 5-chlorocarbonyl pentanoic acid (Samples 9-2 and 9-4) demonstrated a 30% improvement in salt passage as compared with samples prepared with structurally similar 1,4-dichloro carbonyl butane additive (Samples 9-1 and 9-3).

**Table 9:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| Control | 0 | 36.7 | 0.65% | 2.57 | 0.06% |
| 9-1 | 0.007 | 34.3 | 0.61% | 1.50 | 0.09% |
| 9-2 | 0.007 | 31.0 | 0.38% | 1.14 | 0.01% |
| 9-3 | 0.02 | 33.8 | 0.70% | 0.60 | 0.10% |
| 9-4 | 0.02 | 32.5 | 0.45% | 0.72 | 0.03% |

### Example 10:

A sample composite polyamide membrane was prepared using 9-chlorocarbonyl nonanoic acid as the subject monomer. For comparison, a control membrane was also made without the subject monomer. The total acid chloride content of the non-polar solutions used to prepare each sample was held constant at 0.21 % w/v. The concentration of the subject monomer was 0.011% w/v while the remaining acid chloride content was contributed solely by TMC. As shown in Table 10, membranes prepared with 9-chlorocarbonyl nonanoic acid showed over 26% improvement in salt passage over the control membrane.

**Table 10:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| Control | 0 | 38 | 0.53% | 0.55 | 0.02% |
| 10-1 | 0.011 | 34.4 | 0.39% | 1.67 | 0.03% |

### Example 11:

Sample composite polyamide membranes were made using 2,4-dioxo-3-oxabicyclo[3.3.1] nonane-7-carboxylic acid as the subject monomer. For comparison, a control membrane was also prepared without the subject monomer. The total acid chloride content of the non-polar solutions used to prepare each sample was held constant at 0.24 % w/v. The concentration of the subject monomer was 0.03% w/v while the remaining acid chloride content was contributed solely by TMC. As shown in Table 11, the subject monomer showed improvement in salt passage compared with membrane made with only TMC.

**Table 11:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| Control | 0 | 47.2 | 0.82% | 0.36 | 0.11% |
| 11-1 | 0.03 | 44.3 | 0.63% | 0.97 | 0.04% |

### Example 12: (Comparison)

A sample composite polyamide membrane was prepared using 1,8-dichlorocarbonyloctane in the non-polar phase. For comparison, a control membrane was also prepared without 1,8-dichlorocarbonyloctane. The total acid chloride content of the non-polar solutions used to prepare each sample was held constant at 0.21 % w/v. The concentration of the non-hydrolyzed sample monomer, 1,8-dichlorocarbonyloctane, was 0.011% w/v while the remaining acid chloride content was contributed solely by TMC. As shown in Table 12, no substantive improvement in salt passage was observed when the sample polyfunctional acid chloride was not hydrolyzed.

**Table 12:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| Control | 0 | 41.2 | 0.68% | 0.97 | 0.07% |
| 12-1 | 0.011 | 40.3 | 0.68% | 3.08 | 0.16% |

### Example 13.

Sample composite polyamide membranes were made using an aqueous 3.5 wt. % mPD solution and a non-polar solution including TMC and 4-(chlorocarbonyl)butanoic acid as the subject monomer within an isoparaffinic solvent (ISOPAR L). The TMC content of the non-polar solutions used to prepare each sample was held constant at 0.11 % w/v. No samples included tributylphosphate (TBP). The concentration of the subject monomer was approximately 0.01% w/v in Sample 13-1 and 0% in control. The non-polar solution also contained 4 % mesitylene as a co-solvent. Salt passage decreased as a result of the incorporation of 4-(chlorocarbonyl)butanoic acid in the polymer.

**Table 13:**

| Sample No. | Monomer Concentration (%w/v) | Flux (GFD) | NaCl Passage (%) | Flux Std. Dev. (GFD) | NaCl Passage Std. Dev. (%) |
|---|---|---|---|---|---|
| Control | 0 | 26.3 | 0.60% | 0.25 | 0.12% |
| 13-1 | 0.01 | 25.7 | 0.56% | 0.42 | 0.02% |

### TBP alternatives to make membranes with mhTMC

All sample membranes were produced using hand casting method. Polysulfone supports (cast from 16.5wt. % solutions in dimethylformamide (DMF)) were soaked in 3.5 wt. % aqueous solutions of meta-phenylene diamine (mPD). The resulting support was then pulled through a reaction table at constant speed while a thin, uniform layer of a non-polar solution was applied. The non-polar solution included isoparaffinic (ISOPAR L), trimesoyl acid chloride (TMC) and an additional additive identified below. Excess non-polar solution was removed by rinsing with hexane and the resulting composite membrane was kept in water. Coupons of the sample membranes were then subject to standard testing using an aqueous salt solution (2000 ppm NaCl) at 225 psi, pH 8 and at room temperature. The testing results are summarized in the tables provided below.

### Example 14:

Sample composite polyamide membranes were prepared using tris(2-ethyl hexyl) phosphate (TEHP). The total acid chloride content of the non-polar solutions used to prepare each sample was held constant at 0.13% w/v. The concentration of mono-hydrolyzed trimesoyl chloride (referred to as mhTMC) was varied from 0 to 0.03% w/v while the remaining acid chloride content was contributed solely by TMC. The concentration of TEHP was kept constant at 0.235% w/v.

**Table 14**

| Sample No. | mhTMC Conc. (%w/v) | Flux (GFD) | NaCl Passage (%) | Flux Std. Dev. (GFD) | NaCl Passage Std. Dev. (%) |
|---|---|---|---|---|---|
| Control | 0 | 33.09 | 0.41% | 4.10 | 0.17% |
| 14-1 | 0.01 | 22.16 | 0.64% | 1.96 | 0.03% |
| 14-2 | 0.03 | 31.25 | 0.41% | 0.68 | 0.02% |

### Example 15:

Sample composite polyamide membranes were prepared using triethyl phosphate (TEP). The total acid chloride content of the non-polar solutions used to prepare each sample was held constant at 0.13% w/v. The concentration of mono-hydrolyzed trimesoyl chloride (referred to as mhTMC) was varied from 0 to 0.01% w/v while the remaining acid chloride content was contributed solely by TMC. The concentration of TEP was kept constant at 0.098% w/v.

**Table 15**

| Sample No. | mhTMC Conc. (%w/v) | Flux (GFD) | NaCl Passage (%) | Flux Std. Dev. (GFD) | NaCl Passage Std. Dev. (%) |
|---|---|---|---|---|---|
| Control | 0 | 34.791 | 0.367% | 2.65 | 0.04% |
| 15-1 | 0.01 | 32.752 | 0.34% | 2.65 | 0.04% |

## Claims

1. A method for making a composite polyamide membrane comprising a porous support and a thin film polyamide layer, wherein the method comprises the step of applying a polyfunctional amine monomer and polyfunctional acid halide monomer to a surface of the porous support and interfacially polymerizing the monomers to form a thin film polyamide layer,
wherein the method is **characterized by** applying a coating solution to the surface of the porous support comprising:
i) a hydrocarbon solvent:
ii) greater than 0.01 weight percent of an additional monomer comprising a carboxylic acid monomer comprising an aliphatic or aromatic moiety substituted with single carboxylic acid functional group and at least one acyl halide functional group and comprising equal to or less than 30 carbon atoms, and
iii) a tri-hydrocarbyl phosphate compound represented by Formula (I): 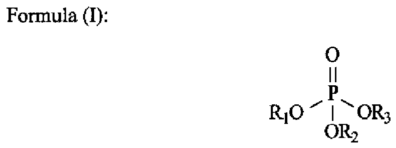
wherein R₁, R₂ and R₃ are independently selected from hydrogen and hydrocarbyl groups comprising from 1 to 10 carbon atoms, with the proviso that no more than one of R₁, R₂ and R₃ are hydrogen,
wherein the interfacial polymerization is conducted in the presence of the carboxylic acid monomer and tri-hydrocarbyl phosphate compound.

2. The method of claim 1 wherein the coating solution further comprises the polyfunctional acyl halide monomer.

3. The method of claim 1 wherein the carboxylic acid monomer is present in the coating solution at a concentration greater than its solubility limit in the hydrocarbon solvent but less than its solubility limit in the coating solution.

4. The method of claim 1 wherein the carboxylic acid monomer is present in the coating solution at a concentration greater than 0.02 weight percent.

5. The method of claim 2 wherein the coating solution further comprises the polyfunctional acyl halide monomer.

6. The method of claim 1 wherein the carboxylic acid monomer is a mono-hydrolyzed analog of the polyfunctional monomer.

7. The method of claim 1 wherein the carboxylic acid monomer is formed in-situ within a coating solution prepared by combining water with the polyfunctional acyl halide monomer, tri-hydrocarbyl phosphate compound and a hydrocarbon solvent.

8. The method of claim 7 wherein the coating solution comprises:
i) water at a concentration of less than 1 wt%,
ii) the polyfunctional acyl halide monomer at a concentration of less than 10 wt% and
iii) the tri-hydrocarbyl phosphate compound at a concentration of less than 10 wt%.

9. The method of claim 7 wherein the coating solution comprises:
i) water at a concentration of less than 0.5 wt%,
ii) the polyfunctional acyl halide monomer at a concentration of less than 5 wt%, and
iii) the tri-hydrocarbyl phosphate compound at a concentration of less than 5 wt%.

10. The method of claim 7 wherein the coating solution comprises the polyfunctional acyl halide monomer at a molar ratio with water from 1:2 to 100:1.

11. The method of claim 7 wherein the coating solution comprises the tri-hydrocarbyl phosphate compound at a molar ratio with the polyfunctional acyl halide monomer of 100:1 to 1:1000.

12. The method of claim 7 wherein the coating solutions comprises at least 80 v/v% of the hydrocarbon solvent.

13. The method of claim 2 wherein the carboxylic acid monomer and tri-hydrocarbyl phosphate compound are provided in the coating solution in a molar ratio of from 1:1000 to 2:1.

14. The method of claim 2 wherein the carboxylic acid monomer and tri-hydrocarbyl phosphate compound are provided in the coating solution in a molar ratio of from 1:100 to 1:1.

## Patentansprüche

1. Ein Verfahren zum Anfertigen einer Verbundpolyamidmembran, die einen porösen Träger und eine Dünnfilmpolyamidschicht beinhaltet, wobei das Verfahren den Schritt des Auftragens eines polyfunktionellen Aminmonomers und eines polyfunktionellen Säurehalogenidmonomers auf eine Oberfläche des porösen Trägers und das Grenzflächenpolymerisieren der Monomere zum Bilden einer Dünnfilmpolyamidschicht beinhaltet,
wobei das Verfahren **dadurch gekennzeichnet ist, dass** eine Beschichtungslösung auf die Oberfläche des porösen Trägers aufgetragen wird, die Folgendes beinhaltet:
i) ein Kohlenwasserstofflösungsmittel;
ii) zu mehr als 0,01 Gewichtsprozent ein zusätzliches Monomer, das ein Carbonsäuremonomer beinhaltet, welches einen aliphatischen oder aromatischen Anteil beinhaltet, der mit einer einzelnen funktionellen Carbonsäuregruppe und mindestens einer funktionellen Acylhalogenidgruppe substituiert ist, und gleich oder weniger als 30 Kohlenstoffatome beinhaltet, und
iii) eine Trihydrocarbylphosphatverbindung, die durch die folgende Formel (I) dargestellt ist: 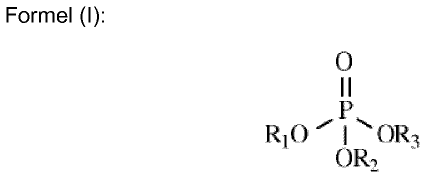
wobei R₁, R₂ und R₃ unabhängig ausgewählt sind aus Wasserstoff und Hydrocarbylgruppen, die 1 bis 10 Kohlenstoffatome beinhalten, mit der Maßgabe, dass nicht mehr als einer von R₁, R₂ und R₃ Wasserstoff sind,
wobei die Grenzflächenpolymerisation in Gegenwart des Carbonsäuremonomers und der Trihydrocarbylphosphatverbindung durchgeführt wird.

2. Verfahren gemäß Anspruch 1, wobei die Beschichtungslösung ferner das polyfunktionelle Acylhalogenidmonomer beinhaltet.

3. Verfahren gemäß Anspruch 1, wobei das Carbonsäuremonomer in der Beschichtungslösung in einer Konzentration, die größer als seine Löslichkeitsgrenze in dem Kohlenwasserstofflösungsmittel, aber geringer als seine Löslichkeitsgrenze in der Beschichtungslösung ist, vorliegt.

4. Verfahren gemäß Anspruch 1, wobei das Carbonsäuremonomer in der Beschichtungslösung in einer Konzentration von mehr als 0,02 Gewichtsprozent vorliegt.

5. Verfahren gemäß Anspruch 2, wobei die Beschichtungslösung ferner das polyfunktionelle Acylhalogenidmonomer beinhaltet.

6. Verfahren gemäß Anspruch 1, wobei das Carbonsäuremonomer ein einfach hydrolisiertes Analog des polyfunktionellen Monomers ist.

7. Verfahren gemäß Anspruch 1, wobei das Carbonsäuremonomer in situ innerhalb einer Beschichtungslösung gebildet wird, hergestellt durch Kombinieren von Wasser mit dem polyfunktionellen Acylhalogenidmonomer, der Trihydrocarbylphosphatverbindung und einem Kohlenwasserstofflösungsmittel.

8. Verfahren gemäß Anspruch 7, wobei die Beschichtungslösung Folgendes beinhaltet:
i) Wasser mit einer Konzentration von weniger als 1 Gew.-%,
ii) das polyfunktionelle Acylhalogenidmonomer mit einer Konzentration von weniger als 10 Gew.-% und
iii) die Trihydrocarbylphosphatverbindung mit einer Konzentration von weniger als 10 Gew.-%.

9. Verfahren gemäß Anspruch 7, wobei die Beschichtungslösung Folgendes beinhaltet:
i) Wasser mit einer Konzentration von weniger als 0,5 Gew.-%,
ii) das polyfunktionelle Acylhalogenidmonomer mit einer Konzentration von weniger als 5 Gew.-% und
iii) die Trihydrocarbylphosphatverbindung mit einer Konzentration von weniger als 5 Gew.-%.

10. Verfahren gemäß Anspruch 7, wobei die Beschichtungslösung das polyfunktionelle Acylhalogenidmonomer in einem Molverhältnis zu Wasser von 1 : 2 bis 100 : 1 beinhaltet.

11. Verfahren gemäß Anspruch 7, wobei die Beschichtungslösung die Trihydrocarbylphosphatverbindung in einem Molverhältnis zu dem polyfunktionellen Acylhalogenidmonomer von 100 : 1 bis 1 : 1000 beinhaltet.

12. Verfahren gemäß Anspruch 7, wobei die Beschichtungslösung zu mindestens 80 Vol.-% das Kohlenwasserstofflösungsmittel beinhaltet.

13. Verfahren gemäß Anspruch 2, wobei das Carbonsäuremonomer und die Trihydrocarbylphosphatverbindung in der Beschichtungslösung in einem Molverhältnis von 1 : 1000 bis 2 : 1 bereitgestellt werden.

14. Verfahren gemäß Anspruch 2, wobei das Carbonsäuremonomer und die Trihydrocarbylphosphatverbindung in der Beschichtungslösung in einem Molverhältnis von 1 : 100 bis 1 : 1 bereitgestellt werden.

## Revendications

1. Une méthode pour réaliser une membrane en polyamide composite comprenant un support poreux et une couche de polyamide en film mince, où la méthode comprend l'étape consistant à appliquer un monomère amine polyfonctionnel et un monomère halogénure d'acide polyfonctionnel sur une surface du support poreux et à polymériser de façon interfaciale les monomères afin de former une couche de polyamide en film mince,
la méthode étant **caractérisée par** le fait d'appliquer une solution de revêtement sur la surface du support poreux comprenant :
i) un solvant hydrocarbure ;
ii) plus de 0,01 pour cent en poids d'un monomère supplémentaire comprenant un monomère acide carboxylique comprenant une partie aliphatique ou aromatique substituée par un groupe fonctionnel acide carboxylique unique et au moins un groupe fonctionnel halogénure d'acyle et comprenant un nombre d'atomes de carbone égal ou inférieur à 30, et
iii) un composé phosphate de tri-hydrocarbyle représenté par la formule (I) : 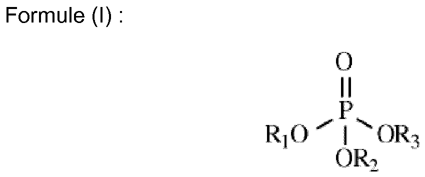
dans laquelle R₁, R₂ et R₃ sont indépendamment sélectionnés parmi l'hydrogène et des groupes hydrocarbyle comprenant de 1 à 10 atomes de carbone, à la condition que pas plus d'un R parmi R₁, R₂ et R₃ ne soit l'hydrogène,
la polymérisation interfaciale étant effectuée en présence du monomère acide carboxylique et du composé phosphate de tri-hydrocarbyle.

2. La méthode de la revendication 1 dans laquelle la solution de revêtement comprend en sus le monomère halogénure d'acyle polyfonctionnel.

3. La méthode de la revendication 1 dans laquelle le monomère acide carboxylique est présent dans la solution de revêtement à une concentration supérieure à sa limite de solubilité dans le solvant hydrocarbure mais inférieure à sa limite de solubilité dans la solution de revêtement.

4. La méthode de la revendication 1 dans laquelle le monomère acide carboxylique est présent dans la solution de revêtement à une concentration supérieure à 0,02 pour cent en poids.

5. La méthode de la revendication 2 dans laquelle la solution de revêtement comprend en sus le monomère halogénure d'acyle polyfonctionnel.

6. La méthode de la revendication 1 dans laquelle le monomère acide carboxylique est un analogue mono-hydrolysé du monomère polyfonctionnel.

7. La méthode de la revendication 1 dans laquelle le monomère acide carboxylique est formé in situ au sein d'une solution de revêtement préparée en combinant de l'eau avec le monomère halogénure d'acyle polyfonctionnel, le composé phosphate de tri-hydrocarbyle et un solvant hydrocarbure.

8. La méthode de la revendication 7 dans laquelle la solution de revêtement comprend :
i) de l'eau à une concentration inférieure à 1 % en poids,
ii) le monomère halogénure d'acyle polyfonctionnel à une concentration inférieure à 10 % en poids et
iii) le composé phosphate de tri-hydrocarbyle à une concentration inférieure à 10 % en poids.

9. La méthode de la revendication 7 dans laquelle la solution de revêtement comprend :
i) de l'eau à une concentration inférieure à 0,5 % en poids,
ii) le monomère halogénure d'acyle polyfonctionnel à une concentration inférieure à 5 % en poids, et
iii) le composé phosphate de tri-hydrocarbyle à une concentration inférieure à 5 % en poids.

10. La méthode de la revendication 7 dans laquelle la solution de revêtement comprend le monomère halogénure d'acyle polyfonctionnel à un rapport molaire avec l'eau allant de 1/2 à 100/1.

11. La méthode de la revendication 7 dans laquelle la solution de revêtement comprend le composé phosphate de tri-hydrocarbyle à un rapport molaire avec le monomère halogénure d'acyle polyfonctionnel de 100/1 à 1/1 000.

12. La méthode de la revendication 7 dans laquelle la solution de revêtement comprend au moins 80 % en volume par volume du solvant hydrocarbure.

13. La méthode de la revendication 2 dans laquelle le monomère acide carboxylique et le composé phosphate de tri-hydrocarbyle sont fournis dans la solution de revêtement dans un rapport molaire allant de 1/1 000 à 2/1.

14. La méthode de la revendication 2 dans laquelle le monomère acide carboxylique et le composé phosphate de tri-hydrocarbyle sont fournis dans la solution de revêtement dans un rapport molaire allant de 1/100 à 1 /1.
